# EUROPEAN PATENT SPECIFICATION

(11) **EP 4 227 169 B1**
(45) Date of publication and mention of the grant of the patent: **16.04.2025**
(21) Application number: 22155910.7
(22) Date of filing: 09.02.2022
(51) Int. Cl.: B60S 1/34

(54) **WIPING SYSTEM FOR A GLASS SURFACE OF A MOTOR VEHICLE**
WISCHSYSTEM FÜR EINE GLASOBERFLÄCHE EINES KRAFTFAHRZEUGS
SYSTÈME D'ESSUYAGE D'UNE SURFACE VITRÉE D'UNE VÉHICULE À MOTEUR

(43) Date of publication of application: 16.08.2023
(73) Proprietor: Valeo Systèmes d'Essuyage, 78322 Le Mesnil Saint Denis (FR)
(72) Inventor: SZYMANEK, Przemyslaw, 93012 BOBIGNY (FR)
(74) Representative: Valeo Visibility

(56) References cited:
- EP-A1- 0 294 526
- EP-A1- 1 717 118
- EP-A1- 3 925 838
- FR-A1- 2 889 498

## Description

The invention relates to a wiper system configured to wipe a glass surface of a vehicle, and more particularly to a wiper system adapted for a complex vehicle glass surface, such as a panoramic glass surface of a vehicle.

Typically, a vehicle includes a windscreen mounted at the front of the vehicle in front of a driver of the vehicle, who can see through the windscreen to the road and the front of the vehicle. The windscreen must be transparent to allow the driver to observe the front of the vehicle.

Because of its position at the front of the vehicle, water and dirt will tend to accumulate on the windscreen, particularly during foul weather conditions, obstructing the driver's view of the road ahead. To this end, the vehicle includes a wiper system to remove water and dirt deposits from the vehicle's glass surface.

The wiper system traditionally consists of an arm extending between a first end attached to the vehicle and a second end to which a wiper blade is attached. The arm is connected to a shaft of an electric motor of the vehicle via its first end, the shaft of the electric motor driving the arm back and forth about a main extension axis of the arm to wipe the windscreen.

Certain vehicles (in particular buses and heavy-goods vehicles) may be equipped with a panoramic glass surface as a windscreen, i.e. a glass surface with end portions that extend over/around the side edge of the vehicle. Such windscreens are considered particularly advantageous in that they provide exceptionally good visibility to the driver.

The end portions can be difficult to wipe effectively for known wiper systems. This is because the wiper system can generally wipe a flat surface, but it is more complicated to wipe a window extending in at least two intersecting planes.

Document EP 1 717 118 A1 discloses a wiper system with a rotational connection according to the state of the art.

In a first aspect, therefore, the present invention is directed to a wiping system for a glass surface of a vehicle, the wiping system comprising at least one wiper blade for wiping the glass surface and an arm carrying the wiper blade, the arm comprising at least one driver configured to drive the wiper blade in a reciprocating manner, a rod at the end of which the wiper blade is arranged, and at least one connecting member arranged between the rod and the driver, the arm having a pivot connection between the connecting member and the driver and a rotational connection between the connecting member and the rod.

According to the invention, the wiping system comprises a means for limiting the pivoting of the pivotal connection between the connecting member and the driver.

The pivot connection enables at least the connecting member to be pivoted about a main extension axis of the arm, the connecting member pivoting the arm shaft and the wiper blade.

The pivot limiting means may be configured to block the pivoting of the connecting member, i.e. to limit this pivoting to an angular sector in order to prevent the connecting member from pivoting the wiper blade too far. The pivot-limiting device thus locks the connecting member in a first position or a second position, the connecting member pivoting from one position to the other.

Depending on the particular embodiment, the pivot-limiting device may be configured to block the pivoting of the connecting member during operation, defining the limits of the wiper blade's pivoting trajectory.

Alternatively, the pivot-limiting device can be made to serve as a safety stop, preventing the wiping system from over-rotating and damaging the wiper system, windscreen, and/or vehicle body. Such over-rotation can occur when certain portions of the wiper blade are either blocked from freely moving or when they are forced beyond their ordinary range of motion.

According to an optional feature of the invention, the pivotal connection is about an axis and the rotational connection is about a direction, the axis being secant to the direction.

According to another optional feature of the invention, the pivot limiting means comprises a groove arranged on the driver and a pin projecting from the connecting member, the pin cooperating with the groove to block pivoting of the connecting member about the axis of the pivotal connection at a first end of the groove or a second end of the groove.

According to another optional feature of the invention, the pivot limiting means comprises a groove arranged on the connecting member and a pin projecting from the driver, the pin cooperating with the groove to block pivoting of the connecting member about the axis of the pivotal connection at a first end of the groove or a second end of the groove.

According to another optional feature of the invention, the pivot limiting means locks the connecting member in a first position and in at least a second position after pivoting the connecting member about the pivot linkage.

According to another optional feature of the invention, the groove has a curved shape between the first end and the second end. Furthermore, the curvature of the groove is inscribed in a circle whose center is coincident with the axis of the pivot connection.

According to another optional feature of the invention, the pin has a curved profile cooperating with the curved shape of the groove. Likewise, the curvature of the pin is inscribed in a circle whose center is coincident with the axis of the pivot connection.

According to another optional feature of the invention, the wiper system includes a linkage member configured to rotate at least the arm shaft about the pivot connection relative to the driver, the linkage member being configured to force rotation of the arm shaft about the pivot connection.

According to another optional feature of the invention, the connecting member comprises at least one lever and at least one swivel joint arranged at one end of the lever.

According to another optional feature of the invention, the driver and/or the rod comprises at least one protrusion at the end of which the ball joint is arranged.

In a second aspect, the present invention also relates to a method of wiping a glazed surface by a wiping system according to any of the preceding claims, the glazed surface comprising a first portion extending in a first plane and at least one second portion curved relative to the first plane.

According to the invention, the method characterised in that the pivot limiting member locks the connecting member relative to the driver in a first position to wipe the first portion of the glass surface and locks the connecting member relative to the driver in a second position to wipe the second portion of the glass surface, the connecting member being pivoted about the pivot linkage to move from one position to the other.

Other features, details and advantages of the invention will become clearer on reading the following description on the one hand, and several exemplary embodiments given by way of indication and not limitation with reference to the appended schematic drawings on the other hand, in which:
Figure 1 is a perspective representation of a wiping system according to the invention disposed on a glass surface having a flat portion and a curved portion;
Figure 2 is a perspective view of the wiping system shown in Figure 1;
Figure 3 is a perspective representation of a driver of an arm of the wiper system shown in Figure 1;
Figure 4 is a perspective representation of a connecting member of a wiper system according to Figure 1; and
Figure 5 is a longitudinal section of a driver of an arm of a wiper system according to Figure 1, and of a connecting member of the wiper system according to Figure 1.

The features, variants and different embodiments of the invention may be associated with one another in various combinations, provided that they are not incompatible or exclusive of one another. In particular, it will be possible to imagine variants of the invention comprising only a selection of features described hereinafter in isolation from the other features described, if this selection of features is sufficient to confer a technical advantage and/or to differentiate the invention from the prior art.

In the figures, elements common to several figures retain the same reference.

In the following detailed description, the terms "longitudinal", "transverse" and "vertical" refer to the orientation of a wiper system according to the invention. A longitudinal direction corresponds to a main direction of elongation of a duct of the arm of the wiping system, this longitudinal direction being parallel to a longitudinal axis L of an L, V, T shown in the figures. A transverse direction corresponds to a direction along which a protrusion of a driver of the arm mainly extends, this transverse direction being parallel to a transverse axis T of the reference frame L, V, T and this transverse axis T being perpendicular to the longitudinal axis L. Finally, a vertical direction corresponds to a direction parallel to a vertical axis V of the reference frame L, V, T, this vertical axis V being perpendicular to the longitudinal axis L and the transverse axis T

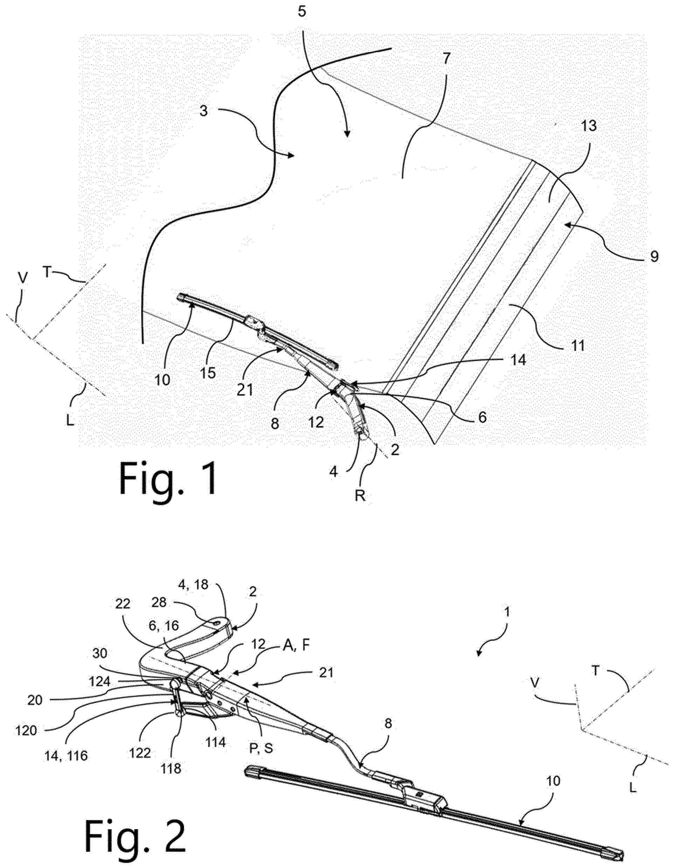

As illustrated in Figure 1, a wiper system 1 comprises at least one arm 21 comprising a driver 2 extending between a first end 4 and a second end 6. At its first end 4, the driver 2 is attached to a vehicle, and more particularly to a shaft of an electric motor that sets the wiper system 1 in motion about a rotation axis R of the wiper system 1. The wiping system 1 has the function of wiping a glass surface of the vehicle, which may, for example, be the windscreen 3 of the vehicle. According to the invention, the windscreen 3 is a panoramic glass surface comprising at least two parts: a first portion 5 comprising at least one flat surface 7 extending in a first plane and a second portion 9 extending in a second plane secant to the first plane. The second portion 9 comprises a planar surface 11 extending in the second plane and a curved surface 13 connecting the planar surface 11 of the second portion 9 to the planar surface 7 of the first portion 5. The wiper system 1 is driven in rotation, about the axis of rotation R. Once the electric motor is switched on, the wiper system 1 performs a back and forth movement against the windscreen 3 of the vehicle to wipe it, performing at least one pass on the first portion 5 and on the second portion 9 of the windscreen 3.

In addition, the wiping system comprises a wiper blade 10 comprising at least one wiping strip 15 configured to be in contact with the windscreen 3 of the vehicle and to wipe it. The wiping strip 15 has a triangular cross-section, only one edge of which is in contact with the windscreen 3, and this edge is referred to as the wiping edge. The wiping strip 15 moves around a hinge, a line passing through the wiping angle of the wiping strip 15 and the hinge and forms a specific angle with the windscreen 3.

In order to perform an effective wipe, the specific angle must form an angle within a range of values. This angle must be maintained on the first portion 5 of the windscreen 3 as well as on its second portion 9; the invention achieves this by simple and reliable means.

As illustrated in Figure 2, the wiping system 1 thus comprises the wiper blade 10, the arm 21 comprising on the one hand the driver 2 and on the other hand a rod 8, and a connecting member 12 which is located between the second end 6 of the driver 2 and the rod 8, the rod 8 extending between the connecting member 12 and the wiper blade 10.

The connecting member 12 is connected to the rod 8 on the one hand and to the driver 2 on the other hand. The connection between the connecting member 12 and the rod 8 forms a rotational connection A around which the rod 8 and the wiper blade 10 can be rotated. This rotational connection A extends along a direction substantially parallel to the transverse axis T of the trihedron L, V, T.

The connection between the connecting member 12 and the driver 2 forms a pivot connection P about which the connecting member 12 and the rod 8 can be pivoted relative to the driver 2. This pivot connection P extends along an axis S which is substantially parallel to the longitudinal axis L of the marker L, V, T.

Here, the direction F of the rotational connection A and the axis S of the pivotal connection P are perpendicular to each other, when these directions are in mutually intersecting planes. However, and as shown here, the direction F which defines the rotational connection A extends in a plane different from the plane in which the axis S which defines the pivot connection P extends, the two planes are secant to each other.

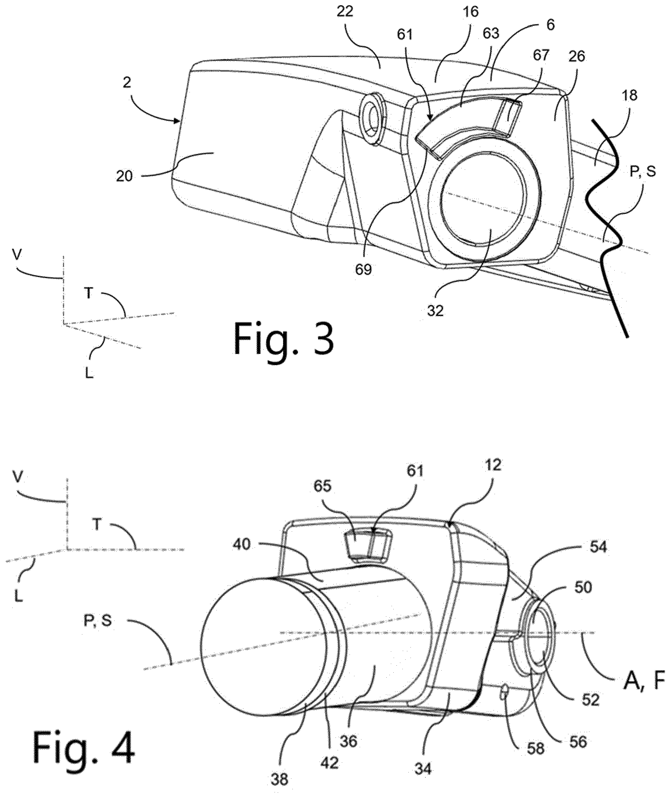

According to the invention, the wiper system 1 comprises a device for limiting the pivoting of the connecting member 12 and the driver 2 about the pivot connection P. This pivoting limitation device is more particularly visible in Figures 3 to 5. The pivot limiting means is configured here to block the pivoting of the connecting member 12 about the pivot connection P, i.e. to limit this pivoting to a defined angular sector in order to prevent the connecting member 12 from pivoting the wiper blade 10 too far. The pivot limiting means thus blocks the connecting member 12 in a first position or a second position, the connecting member 12 pivoting from one position to the other.

Each of the elements of the wiping system 1 will be described, before describing the cooperation of these elements with each other, with reference to figures 2 to 5.

As illustrated in Figures 2 and 3, the driver 2 generally assumes an inclined shape and comprises a first portion 16 and a second portion 18, the first portion 16 terminating at the second end 6 and extending along the axis S that defines the pivot connection P, and the second portion 18 terminating at the first end 4 and extending along a secant direction to the axis S that defines the pivot connection P. Here, the secant direction and the axis S which defines the pivot connection P form an angle between 1° and 90°, as a non-exhaustive example of the invention.

The driver 2 generally takes the form of a "U-shaped" section according to a cross-sectional view made in a plane in which the transverse axis T and the vertical axis V lie, with two side faces 20 and a top face 22 connecting the two side faces 20, each face 20, 22 extending from the first end 4 to the second end 6 of the driver 2. At least in the first portion 16 of the driver 2, each side face 20 extends in a plane parallel to the longitudinal L and vertical V axis, while the top face 22 extends in a plane parallel to the longitudinal L and transverse T axis. The upper face 20 and side faces 20, 22 participate in delimiting a cavity 24. The driver 2 also comprises a front face 26, visible in figure 3, extending in a plane parallel to the transverse axis T and vertical V, the front face 26 being located at the second end 6 of the driver 2 by joining the side faces 20 and the upper face 22.

At its first end 4, the driver 2 comprises a hole 28 configured to receive a shaft of the electric motor of the vehicle. The hole 28 extends along the vertical axis V passing through the top face 22 and within the cavity 24. Here, the hole 28 takes a circular shape. However, a hole 28 taking another shape is included within the scope of the invention.

The driver 2 has a bore 32 at the second end 6 located through the front face 26 of the driver 2. The bore 32 includes at least one through hole in the front face 26 connecting the cavity 24 to the exterior of the driver 2. The bore 32 extends along the longitudinal axis L and is configured to cooperate with the connecting member 12 to form the pivotal connection P.

In addition, the driver 2 comprises a protrusion 30 emerging from one of the side faces 20 and extending along an axis parallel to the transverse axis T. More particularly, the protrusion 30 is located at the second end 6 and takes the form of a circular shaft. The protrusion 30 is configured to cooperate with a connecting member, an exemplary embodiment of which will be described in more detail below.

As shown in Figures 2, 4 and 5, the connecting member 12 comprises a main body 34 and at least one pivotal element 36 extending from the main body 34 to the outside of the connecting member 12 along the longitudinal axis L. The pivotal element 36 is a cylinder-like pin having different sections among which are an end section 38 and at least one base section 40 located between the end section 38 and the main body 34. The end section 38 differs from the base section 40 with a different diameter, and more particularly, the end section 38 has a smaller diameter than the diameter of the base section 40. Furthermore, the base section 40 has a constant diameter. These technical features are only a non-limiting example of the pivot member 36.

Advantageously, the end section 38 includes a notch 42 located circularly around the pivot member 36. Furthermore, the notch 42 has a diameter smaller than the diameter of the end section 38.

The connecting member 12 includes an axial locking device here in the form of a clip 44 configured to cooperate with the notch 42 of the pivot member 36. The clip 44 is a curved rod that is elastically deformable. More specifically, the clip 44 deforms its initial structure to be assembled or disassembled on the pivot member 36 in the notch 42 and returns to its initial structure after being deformed. The clip 44 is used to hold the connecting member 12 once the pivot member 36 is received in the bore 32 of the driver 2. To this end, the clip 44 has an inner diameter slightly larger than the diameter of the notch 42 to form a cooperation therewith when the clip 44 is assembled to the notch 42. Further, the outer diameter of the clip 44 is greater than the diameter of the end section 38 and the diameter of the driver bore 32.

In an alternative, variant embodiment (not shown), a starlock-type retaining ring may be used to retain the connecting member 12 in assembled position. Other, similar retention means may also be employed, without departing from the scope of the present invention.

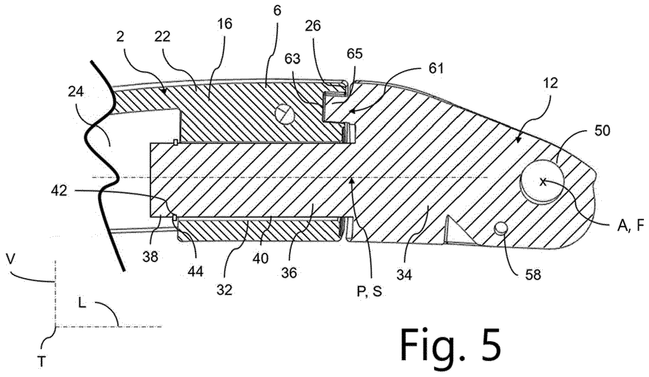

As shown in Figure 5, the pivot member 36 is received within the bore 32 with the end section 38 partially disposed within the cavity 24 of the driver 2. To this end, the diameter of the end section 38 is smaller than the diameter of the bore 32 to allow cooperation between the pivot member 36 and the bore 32. The clip 44 is assembled to the notch 42 once the end section 38, and more particularly the notch 42, is disposed in the cavity 24 of the driver 2.

The pivot element 36 and the bore 32 cooperate to form the pivot connection P which rotates about the axis S. Thus, the pivot element 36 and the connecting member 12 can be respectively moved about this pivot connection P in the bore 32 and the driver 2.

As shown in Figures 4 and 5, the connecting member 12 includes a channel 50 that extends through the main body 34, parallel to the transverse axis T. The channel 50 is circular, such as a hollow cylinder, and extends through the main body 34. The channel 50 has a first end 52 located on a first side face 54 of the main body 34, a second end of the channel 50 located on a second side face (not illustrated) of the main body 34, the first and second side faces 54 of the main body 34 are perpendicular to the transverse axis T.

The channel 50 includes a crown 56 at least at the first end 52 as shown in Figure 4, or preferably at each end 54. The crown 56 takes the form of a hoop projecting outwardly from the main body 34 along the transverse axis T.

The main body 34 further includes at least one hole 58 that extends through the main body 34 from the first lateral side 54 to the second lateral side. The hole 58 is like a hollow cylinder, similar to the channel 50. However, the diameter of the hole 58 is smaller than the diameter of the channel 50, the hole 58 and the channel 50 being distinct and independent from each other.

The channel 50 and the hole 58 of the connecting member 12 are configured to cooperate with the rod 8, the connecting member 12 partially connecting the rod 8 and the driver 2.

The device for limiting the pivoting of the connecting member 12 will now be described in more detail, in particular with reference to Figures 3 to 5.

As illustrated in Figures 3 to 5, the pivoting limitation device 61 comprises a groove 63 arranged on the driver 2 and a pin 65 projecting from the connecting member 12, the pin 65 cooperating with the groove 63 to block the pivoting of the connecting member 12 about the axis S of the pivot connection P at a first end 67 of the groove 63 or at a second end 69 of the groove 63. More precisely, the groove 63 is arranged in the front face 26 of the driver 6, between the bore 32 and the upper face 22 along the vertical direction V. As for the pin 65, it protrudes from the main body 34 along the longitudinal direction L from the face from which the pivoting element of the connecting member 12 protrudes.

According to an alternative of the invention, the pivoting limitation device 61 comprises a groove 63 arranged on the connecting member 12 and a pin 65 projecting from the driver 2, the pin 65 cooperating with the groove 63 to block the pivoting of the connecting member 12 about the axis S of the pivot connection P at a first end 67 of the groove 63 or at a second end 69 of the groove 63. It is understood that in this alternative, the groove 63 and the pin 65 are arranged in reverse to the arrangements described above. However, the cooperation between the groove 63 and the pin 65 are similar in this alternative of the invention.

According to still another alternative embodiment of the invention (not illustrated), more than one pair of groove and pin devices may be provided between the driver and the connecting member. In such a configuration, the grooves and pins should be offset about the axis S so as to avoid conflicting with each other. The grooves/pins may be disposed at equal angular intervals about the axis S (*e.g.* four groove-pin pairs disposed at 90° intervals) to simplify construction and assembly, or alternatively disposed at unequal intervals to *e.g.* provide a keying effect.

Such a configuration may be preferable in that it provides additional resistance and rigidity to the blocking function of the groove-pin devices. The groove 63 has a curved shape between the first end 67 and the second end 69. In other words, the groove 63 is inscribed in a circle whose center is coincident with the axis of the pivot connection.

Similarly, the pin 65 has a curved profile cooperating with the curved shape of the groove 63. Similarly, the pin 65 is inscribed in a circle whose center is coincident with the axis of the pivot connection.

The curved shapes of the groove 63 and of the pin 65 allow the connecting member 12 to pivot about the axis S while blocking said pivoting when the pin 65 comes into abutment with either end 67, 69 of the groove 63.

It is understood that the pivoting limitation device 61 authorizes the pivoting of the connecting member 12 about the pivot linkage P through a trajectory corresponding to a predetermined angle. The predetermined angle may correspond to the normal angle of rotation of the wiper blade 10 as the wiper system moves from an extremity on the first portion of the windscreen 3 to an extremity on the second portion of the windscreen 3. In such a configuration, the pivoting limitation device 61 effectively defines the endpoints of the rotation of the arm 21 about the axis S of the pivot connection P.

This limitation of the pivoting of the connecting member 12 about the pivot linkage thus blocks the pivoting of the wiper blade 10 so that the wiping strip 15 of the latter effectively wipes any portions of the glazed surface of the vehicle.

Thus, it can be defined that the pivoting limitation device 61 blocks the connecting member 12 in a first position and in at least a second position after pivoting of the connecting member 12 about the pivot linkage P. The first position of the connecting member 12 corresponds to the position of the connecting member 12 when the pin 65 is in contact with the first end 67 of the groove 63, while the second position of the connecting member 12 corresponds to the position of the connecting member 12 when the pin 65 is in contact with the second end 69 of the groove 63.

In an alternative configuration, the pivoting limitation device 61 may authorize the pivoting of the connecting member 12 about the pivot linkage P through a trajectory corresponding to a predetermined angle which is greater than the normal angle of rotation of the wiper blade 10 over its trajectory across the windscreen 3.

In such a case, the pivoting limitation device 61 serves as a safety stop, preventing the connecting member 12 of the arm 21 from over-rotating, and consequently damaging the wiper system 1 and/or the windscreen 3.

According to an aspect of the invention, and as illustrated in Figure 2, the wiping system includes a link member 14 configured to rotate at least the rod 8 of the arm 21 about the pivot link P relative to the driver 2, the link member 14 being configured to force the pivoting of the rod 8 of the arm 21 about the pivot link P.

It is understood that the link member 14 is the element of the wiping system 1 that produces the force necessary to pivot the rod 8 and the connecting member 12 about the pivot connection P, via the kinematic relationship between the rod 8, the connecting member 12, and the driver 2 which is enforced by the link member 14.

To this end, the link member 14 includes at least one lever 116 and at least one ball joint 118 disposed at one end of the lever 116. In this example embodiment, the lever 116 has a central portion 120 extending rectilinearly between a first longitudinal end 122 and a second longitudinal end 124, each longitudinal end 122, 124 comprising a ball joint 118.

More particularly, the lever 116 includes a housing at each longitudinal end 122, 124 in which the ball joint 118 is disposed. Each housing comprises at least one spherical portion in which the ball joint 118 can be rotated. To this end, each spherical portion of the lever 116 has an inner spherical side configured to accommodate the ball joint 118 and allow rotation of said ball joint 118 within the spherical portion.

As shown in Figures 2 and 4, the lever 116 cooperates with the driver 2 by housing the first protrusion 30 in one of the ball joints 118.

Advantageously, the rod 8 comprises a protrusion 114 extending along and parallel to the protrusion 30 of the driver 2. The protrusion 114 of the rod 8 thus cooperates with the other ball joint 118 of the lever 116. The lever 116 is held in position on the wiper system 1 by the tight guiding of each protrusion 30, 114 in its respective ball joint 118.

In addition, the rod 8 includes at least one spring member configured to hold the wiper blade of the wiper blade against the second portion of the glass surface. The spring member may include hooks at each of its longitudinal ends, one of the hooks engaging a shaft partially received in the hole 58.

The present invention also relates to a method of wiping a glass surface by a wiping system as just described. During this wiping process, when the wiping system wipes the first portion 5 of the glazed surface, the connecting member 12 and the wiper blade 10 are in the first position, the pin 65 being then in contact with the first end 67 of the groove 63.

When the wiping system 1 wipes the second portion 9 of the glass surface, the link member 14, with the assistance of the spring element, guides the connecting member 12 and the wiper blade 10 pivotally about the pivot connection so that the connecting member 12 and the wiper blade 10 move from the first position to the second position. It is understood here that the pin 65 slides in the groove 63 from the first end 67 towards the second end 69 of the groove 63 when the wiper system is in transitional motion from the first portion 5 of the glass surface to the second portion 7 of the glass surface, across the curved surface 13. When the pin 65 contacts the second end 69 of the groove 63, the pivot limiting means 61 blocks the pivoting of the connecting member 12 and the wiper blade 10, the latter being in the second position.

When the wiper system returns to the first position, the link member 14, with the assistance of the spring element, guides the connecting member 12 and the wiper blade 10 pivotally about the pivot connection so that the connecting member 12 and the wiper blade 10 move from the second position to the first position, substantially in reverse of the movement described in the preceding paragraph. It is understood here that the pin 65 slides in the groove 63 from the second end 69 towards the first end 67 of the groove 63 when the wiping system 1. When the pin 65 contacts the first end 67 of the groove 63, the pivot limiting means 61 blocks the pivoting of the connecting member 12 and the wiper blade 10, the latter being in the first position.

## Claims

1. A wiping system (1) for a glass surface (3) of a vehicle, the wiping system (1) comprising at least one wiper blade (10) for wiping the glass surface (3), and an arm (21) carrying the wiper blade (10) the arm (21) comprising:
- at least one driver (2), the driver (2) being configured to drive the wiper blade (10) in a reciprocating manner;
- a rod (8) at the end of which the wiper blade (10) is arranged;
- at least one connecting member (12) arranged between the rod (8) and the driver (2)
the arm (21) having a pivot connection (P) between the connecting member (12) and the driver (2) and a rotational connection (R) between the connecting member (12) and the rod (8)
the wiping system (1) comprising a means (61) for limiting the pivoting of the pivot connection (P) between the connecting member (12) and the driver (2),
**characterized in that** the pivot limiting means (61) comprises at least one groove (63) arranged on the driver (2) and at least one pin (65) projecting from the connecting member (12), and/or at least one groove (63) arranged on the connecting member (12) and at least one pin (65) projecting from the driver (2), said at least one pin (65) cooperating with said at least one groove (63) to block the pivoting of the connecting member (12) about the axis (S) of the pivot connection (P) at the level of the pivot connection (P), the pin (65) cooperating with the groove (63) to block the pivoting of the connecting member (12) about the axis (S) of the pivot connection (P) at a first end (67) of the at least one groove (63) or at a second end (69) of the at least one groove (63).

2. The wiping system (1) according to claim 1, wherein the groove (63) has a curved shape between the first end (67) and the second end (69).

3. A wiping system (1) according to any one of the preceding claims, the pivot connection (P) is made about an axis (S) and the rotational connection (R) is made about a direction (F), the axis (S) being secant to the direction (F).

4. A wiping system (1) according to claim 3, wherein the pin (65) has an arcuate or circular profile cooperating with the curved shape of the groove (63).

5. A wiping system (1) according to any one of the preceding claims, comprising a link member (14) configured to pivot at least the rod (8) of the arm (21) about the pivot link (P) relative to the driver (2), the link member (14) being configured to force the pivoting of the rod (8) of the arm (21) about the pivot link (P).

6. The wiping system (1) according to claim 5, wherein the connecting member (14) comprises at least one lever (116) and at least one ball joint (118) disposed at an end (122, 124) of the lever (116).

7. The wiping system (1) according to claim 6, wherein the driver (2) and/or the rod (8) comprises at least one protrusion (30, 114) at the end of which the ball joint (118) is arranged.

8. Method of wiping a glass surface (3) by a wiping system (1) according to any one of the preceding claims, the glass surface (3) comprising a first portion (5) extending in a first plane and at least one second portion (9) curved with respect to the first plane, the method comprising the steps of:
- wiping a first portion 5, the pivot limiting means (61) blocking the connecting member in a first position;
- wiping a curved surface 13 constituting a transitional region between said first portion (5) and said second portion (9), the connecting member rotating about an axis S from said first position towards a second position;
- wiping a second portion (9), the pivot limiting means (61) blocking the connecting member in said second position.

## Patentansprüche

1. Wischsystem (1) für eine Glasoberfläche (3) eines Fahrzeugs, wobei das Wischsystem (1) mindestens ein Wischblatt (10) zum Wischen der Glasoberfläche (3) und einen das Wischblatt (10) tragenden Arm (21) umfasst, wobei der Arm (21) Folgendes umfasst:
- mindestens einen Treiber (2), wobei der Treiber (2) dazu ausgestaltet ist, das Wischblatt (10) hin- und hergehend anzutreiben,
- eine Stange (8), an deren Ende das Wischblatt (10) angeordnet ist,
- mindestens ein Verbindungsglied (12), das zwischen der Stange (8) und dem Treiber (2) angeordnet ist,
wobei der Arm (21) eine Schwenkverbindung (P) zwischen dem Verbindungsglied (12) und dem Treiber (2) und eine Drehverbindung (R) zwischen dem Verbindungsglied (12) und der Stange (8) aufweist,
wobei das Wischsystem (1) ein Mittel (61) zum Begrenzen des Schwenkens der Schwenkverbindung (P) zwischen dem Verbindungsglied (12) und dem Treiber (2) umfasst,
**dadurch gekennzeichnet, dass** das Schwenkbegrenzungsmittel (61) mindestens eine an dem Treiber (2) angeordnete Nut (63) und mindestens einen von dem Verbindungsglied (12) vorstehenden Stift (65) und/oder mindestens eine an dem Verbindungsglied (12) angeordnete Nut (63) und mindestens einen von dem Treiber (2) vorstehenden Stift (65) umfasst, wobei der mindestens eine Stift (65) mit der mindestens einen Nut (63) zusammenwirkt, um das Schwenken des Verbindungsglieds (12) um die Achse (S) der Schwenkverbindung (P) auf der Höhe der Schwenkverbindung (P) zu blockieren, wobei der Stift (65) mit der Nut (63) zusammenwirkt, um das Schwenken des Verbindungsglieds (12) um die Achse (S) der Schwenkverbindung (P) an einem ersten Ende (67) der mindestens einen Nut (63) oder an einem zweiten Ende (69) der mindestens einen Nut (63) zu blockieren.

2. Wischsystem (1) nach Anspruch 1, wobei die Nut (63) eine gekrümmte Form zwischen dem ersten Ende (67) und dem zweiten Ende (69) aufweist.

3. Wischsystem (1) nach einem der vorhergehenden Ansprüche, wobei die Schwenkverbindung (P) um eine Achse (S) hergestellt ist und die Drehverbindung (R) um eine Richtung (F) hergestellt ist, wobei die Achse (S) eine Sekante zu der Richtung (F) ist.

4. Wischsystem (1) nach Anspruch 3, wobei der Stift (65) ein bogenförmiges oder kreisförmiges Profil aufweist, das mit der gekrümmten Form der Nut (63) zusammenwirkt.

5. Wischsystem (1) nach einem der vorhergehenden Ansprüche, umfassend ein Lenkglied (14), das dazu ausgestaltet ist, mindestens die Stange (8) des Arms (21) um den Schwenklenker (P) bezüglich des Treibers (2) zu schwenken, wobei das Lenkglied (14) dazu ausgestaltet ist, das Schwenken der Stange (8) des Arms (21) um den Schwenklenker (P) zu erzwingen.

6. Wischsystem (1) nach Anspruch 5, wobei das Verbindungsglied (14) mindestens einen Hebel (116) und mindestens ein Kugelgelenk (118) umfasst, das an einem Ende (122, 124) des Hebels (116) angeordnet ist.

7. Wischsystem (1) nach Anspruch 6, wobei der Treiber (2) und/oder die Stange (8) mindestens einen Vorsprung (30, 114) umfassen, an dessen Ende das Kugelgelenk (118) angeordnet ist.

8. Verfahren zum Wischen einer Glasoberfläche (3) mittels eines Wischsystems (1) nach einem der vorhergehenden Ansprüche, wobei die Glasoberfläche (3) einen ersten Abschnitt (5), der sich in einer ersten Ebene erstreckt, und mindestens einen zweiten Abschnitt (9), der bezüglich der ersten Ebene gekrümmt ist, umfasst, wobei das Verfahren die folgenden Schritte umfasst:
- Wischen eines ersten Abschnitts 5, wobei das Schwenkbegrenzungsmittel (61) das Verbindungsglied in einer ersten Position blockiert,
- Wischen einer gekrümmten Oberfläche 13, die einen Übergangsbereich zwischen dem ersten Abschnitt (5) und dem zweiten Abschnitt (9) darstellt, wobei sich das Verbindungsglied um eine Achse S aus der ersten Position zu einer zweiten Position hin dreht,
- Wischen eines zweiten Abschnitts (9), wobei das Schwenkbegrenzungsmittel (61) das Verbindungsglied in der zweiten Position blockiert.

## Revendications

1. Système d'essuyage (1) pour une surface en verre (3) d'un véhicule, le système d'essuyage (1) comprenant au moins un balai d'essuie-glace (10) destiné à essuyer la surface en verre (3), et un bras (21) supportant le balai d'essuie-glace (10), le bras (21) comprenant :
- au moins un dispositif d'entraînement (2), le dispositif d'entraînement (2) étant conçu pour entraîner le balai d'essuie-glace (10) en va-et-vient ;
- une tige (8) à l'extrémité de laquelle est disposé le balai d'essuie-glace (10) ;
- au moins un élément de raccordement (12) disposé entre la tige (8) et le dispositif d'entraînement (2)
le bras (21) comportant une liaison pivotante (P) entre l'élément de raccordement (12) et le dispositif d'entraînement (2) et une liaison rotative (R) entre l'élément de raccordement (12) et la tige (8)
le système d'essuyage (1) comprenant un moyen (61) pour limiter le pivotement de la liaison pivotante (P) entre l'élément de raccordement (12) et le dispositif d'entraînement (2),
**caractérisé en ce que** le moyen de limitation de pivotement (61) comprend au moins une rainure (63) formée sur le dispositif d'entraînement (2) et au moins un ergot (65) faisant saillie à partir de l'élément de raccordement (12), et/ou au moins une rainure (63) formée sur l'élément de raccordement (12) et au moins un ergot (65) faisant saillie à partir du dispositif d'entraînement (2), ledit au moins un ergot (65) coopérant avec ladite au moins une rainure (63) pour bloquer le pivotement de l'élément de raccordement (12) autour de l'axe (S) de la liaison pivotante (P) au niveau de la liaison pivotante (P), l'ergot (65) coopérant avec la rainure (63) pour bloquer le pivotement de l'élément de raccordement (12) autour de l'axe (S) de la liaison pivotante (P) à une première extrémité (67) de l'au moins une rainure (63) ou à une seconde extrémité (69) de l'au moins une rainure (63).

2. Système d'essuyage (1) selon la revendication 1, dans lequel la rainure (63) présente une forme incurvée entre la première extrémité (67) et la seconde extrémité (69).

3. Système d'essuyage (1) selon l'une quelconque des revendications précédentes, la liaison pivotante (P) est réalisée autour d'un axe (S) et la liaison rotative (R) est réalisée autour d'une direction (F), l'axe (S) étant sécant à la direction (F).

4. Système d'essuyage (1) selon la revendication 3, dans lequel l'ergot (65) présente un profil arqué ou circulaire coopérant avec la forme incurvée de la rainure (63).

5. Système d'essuyage (1) selon l'une quelconque des revendications précédentes, comprenant un élément de liaison (14) conçu pour faire pivoter au moins la tige (8) du bras (21) autour de la liaison pivotante (P) relativement au dispositif d'entraînement (2), l'élément de liaison (14) étant conçu pour forcer le pivotement de la tige (8) du bras (21) autour de la liaison pivotante (P).

6. Système d'essuyage (1) selon la revendication 5, dans lequel l'élément de liaison (14) comprend au moins un levier (116) et au moins un joint sphérique (118) disposé à une extrémité (122, 124) du levier (116).

7. Système d'essuyage (1) selon la revendication 6, dans lequel le dispositif d'entraînement (2) et/ou la tige (8) comprennent au moins une saillie (30, 114) à l'extrémité de laquelle est disposé le joint sphérique (118) .

8. Procédé d'essuyage d'une surface en verre (3) au moyen d'un système d'essuyage (1) selon l'une quelconque des revendications précédentes, la surface en verre (3) comprenant une première partie (5) s'étendant dans un premier plan et au moins une deuxième partie (9) courbée par rapport au premier plan, le procédé comprenant les étapes suivantes :
- essuyer une première partie 5, le moyen de limitation de pivotement (61) bloquant l'élément de raccordement dans une première position ;
- essuyer une surface incurvée 13 constituant une région de transition entre ladite première partie (5) et ladite deuxième partie (9), l'élément de raccordement réalisant une rotation autour d'un axe S de ladite première position vers une seconde position ;
- essuyer une deuxième partie (9), le moyen de limitation de pivotement (61) bloquant l'élément de raccordement dans ladite seconde position.
